# EUROPEAN PATENT APPLICATION

(11) **EP 4 847 113 A1**
(43) Date of publication of application: **02.12.2026**
(21) Application number: 26176420.3
(22) Date of filing: 05.05.2026
(51) Int. Cl.: B01D 53/04

(54) **GAS CAPTURE SYSTEM**

(30) Priority: 28.05.2025 US 202519221421
(71) Applicant: GE Vernova Technology GmbH, 5400 Baden (CH)
(72) Inventor: SNIDER, Zachary John, Greenville, 29615 (US); JONES, Jeffrey Clarence, Greenville, 29615 (US)
(74) Representative: Openshaw & Co.

(57) **Abstract**

A system includes a sorbent-based gas capture system configured to capture an undesirable gas from a gas flow. The sorbent-based gas capture system includes one or more adsorbers. The one or more adsorbers include a heat exchanger. The heat exchanger includes an outer shell, a plurality of inner shells disposed inside the outer shell, and a plurality of channels defined by one or more spaces disposed between at least two the plurality of inner shells, between at least one of the plurality of inner shells and the outer shell, or a combination thereof. The plurality of inner shells is configured to receive the gas flow during an adsorption stage. The plurality of channels is configured to receive a fluid flow. The heat exchanger also includes a sorbent material disposed on one or more surfaces within the plurality of inner shells.

## Description

### BACKGROUND

The subject matter disclosed herein generally relates to a gas capture system.

Gas capture systems are frequently used for removing undesirable gases from an exhaust gas and/or the ambient air. Sorbent-based gas capture systems utilize sorbent material to adsorb the undesirable gases. A vacuum and heat may be used to remove the undesirable gases from the sorbent material. However, the formation of a vacuum often requires large and inefficient vacuum chambers. As such, there is a need for efficient and effective gas capture systems to remove undesirable gases from the atmosphere and/or from exhaust gases discharged into the atmosphere.

### BRIEF DESCRIPTION

Certain embodiments commensurate in scope with the originally claimed subject matter are summarized below. These embodiments are not intended to limit the scope of the claimed embodiments, but rather these embodiments are intended only to provide a brief summary of possible forms of the subject matter. Indeed, the presently claimed embodiments may encompass a variety of forms that may be similar to or different from the embodiments set forth below.

In certain embodiments, a system includes a sorbent-based gas capture system configured to capture an undesirable gas from a gas flow. The sorbent-based gas capture system includes one or more adsorbers. The one or more adsorbers include a heat exchanger. The heat exchanger includes an outer shell, a plurality of inner shells disposed inside the outer shell, and a plurality of channels defined by one or more spaces disposed between at least two of the plurality of inner shells, between at least one of the plurality of inner shells and the outer shell, or a combination thereof. The plurality of inner shells is configured to receive the gas flow during an adsorption stage. The plurality of channels is configured to receive a fluid flow. The heat exchanger also includes a sorbent material disposed on one or more surfaces within the plurality of inner shells. The sorbent material is configured to remove the undesirable gas from the gas flow during the adsorption stage.

In certain embodiments, a system includes at least one inner shell configured to mount inside of an outer shell of a heat exchanger of an adsorber of a sorbent-based gas capture system. The at least one inner shell is configured to receive a gas flow during an adsorption stage. The system also includes a sorbent material disposed on one or more surfaces of the at least one inner shell. The sorbent material is configured to remove an undesirable gas from the gas flow during the adsorption stage.

In certain embodiments, a method includes extruding an outer shell of a heat exchanger for a sorbent-based gas capture system, a plurality of inner shells of the heat exchanger, or a combination thereof. The method also includes applying a sorbent material to one or more surfaces of the plurality of inner shells. The method also includes arranging the plurality of inner shells in an interior of the outer shell. One or more fluid channels are defined by a separation between the plurality of inner shells, the outer shell, or a combination thereof.

### BRIEF DESCRIPTION OF THE DRAWINGS

These and other features, aspects, and advantages of the presently disclosed techniques will become better understood when the following detailed description is read with reference to the accompanying drawings in which like characters represent like parts throughout the drawings, wherein:
FIG. 1 is a block diagram of an embodiment of a gas treatment system having one or more gas capture systems configured to capture an undesirable gas from an exhaust gas and/or air, in accordance with embodiments described herein;
FIG. 2 is a block diagram of an embodiment of the gas capture system of FIG. 1, further illustrating a plurality of adsorbers operating in an adsorption stage, a desorption stage, and a cooling stage, in accordance with embodiments described herein;
FIG. 3 is a perspective view of an embodiment of an adsorber of the gas capture system of FIGS. 1 and 2, further illustrating a heat exchanger having a plurality of inner shells in a radial arrangement within an outer shell, in accordance with embodiments described herein;
FIG. 4 is a cross-sectional view of an embodiment of the adsorber of the gas capture system of FIG. 3, further illustrating internal flow paths within the heat exchanger, in accordance with embodiments described herein;
FIG. 5 is a close-up view of an area 5-5 of an embodiment of the adsorber of the gas capture system of FIG. 3, further illustrating a plurality of fins within one of the plurality of inner shells, in accordance with embodiments described herein; and
FIG. 6 is a schematic view of an embodiment of an adsorber of the gas capture system of FIGS. 1 and 2, further illustrating a heat exchanger having a plurality of rectangular inner shells in a staggered arrangement within an outer shell, in accordance with embodiments described herein.

### DETAILED DESCRIPTION

One or more specific embodiments of the presently disclosed systems and methods are described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed embodiments, the articles "a," "an," "the," and "said" are intended to mean that there are one or more of the elements. The terms "comprising," "including," and "having" are intended to be inclusive and mean that there may be additional elements other than the listed elements.

The present disclosure is generally directed towards a gas capture system that includes an adsorber or contactor having an extruded heat exchanger with one or more coatings of a sorbent material. The heat exchanger includes a plurality of inner shells arranged in an outer shell (e.g., rectangular outer shell). The inner shells are configured to receive air and/or exhaust gas having an undesirable gas. The inner shells include the sorbent material that removes the undesirable gas from the air and/or exhaust gas as the air and/or exhaust gas passes through the inner shells. The heat exchanger also includes a plurality of channels defined by one or more gaps (e.g., separations, crevices, spaces, etc.) between the one or more inner shells and the outer shell. The channels are configured to receive a fluid (e.g., liquid, gas, etc.) for indirectly heating and/or cooling the sorbent material during an adsorption stage, a desorption stage, and/or a cooling stage. The present disclosure provides an embodiment of the heat exchanger having the inner shells radially arranged about an inner conduit (central conduit) configured to receive the fluid. For example, the inner shells may include a plurality of radial segments or inner shells (e.g., wedge-shaped or truncated pie-shaped segments or inner shells) projecting radially outward from the inner conduit. The fluid flows from the inner conduit to one or more outer conduits disposed in the outer shell. The inner shells include a plurality of fins with a coating of sorbent material, thereby providing an increased surface area for the sorbent material and heat transfer. Each of the inner shells also defines an interior volume, which may be further divided by the fins, to facilitate the formation of the vacuum during a desorption stage. Thus, the heat exchanger enables small vacuum chambers within the inner shells, rather than surrounding the entire heat exchanger with a large vacuum vessel.

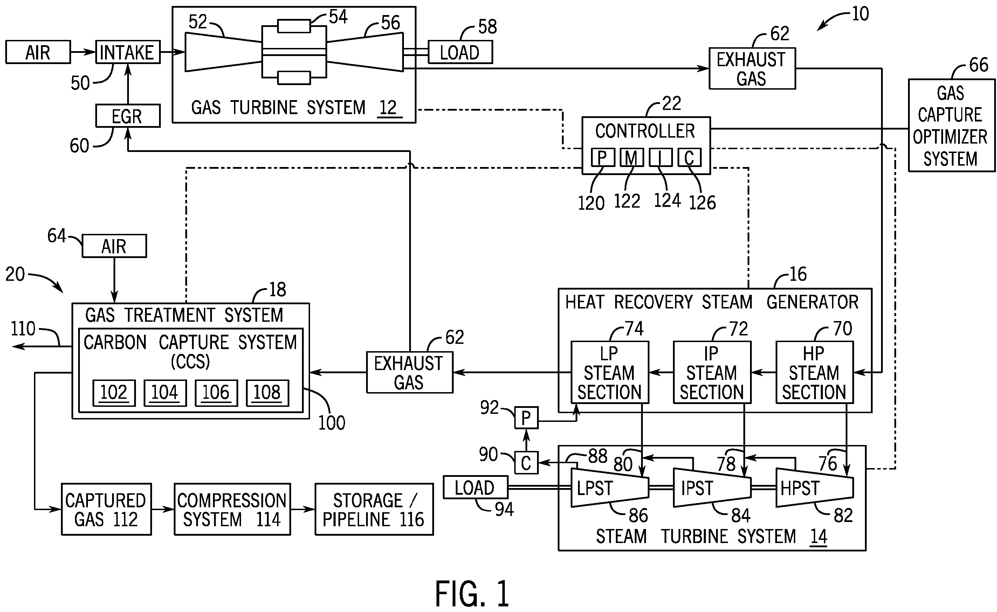

With the foregoing in mind, FIG. 1 is a block diagram of an embodiment of an industrial plant 10 having a gas turbine system 12, a steam turbine system 14, a heat recovery steam generator (HRSG) 16, a gas treatment system 18 having one or more gas capture systems 20, and a controller 22 coupled to each of the systems 12, 14, 16, and 18. As discussed below, the one or more gas capture systems 20 of the gas treatment system 18 are configured to capture an undesirable gas (e.g., CO₂) from exhaust gas (e.g., post combustion capture) and/or air (e.g., direct air capture). As discussed in detail below, the gas treatment system 18 of the industrial plant 10 includes a carbon capture system 100 for use in removing undesirable gases (e.g., CO₂) from the exhaust gas of the combustion systems, captured air from the atmosphere, or a combination thereof. It should be noted that the gas capture system 20 (e.g., carbon capture system 100) may not be necessarily coupled to the gas treatment system 18. In certain embodiments, the carbon capture system 100 may be independent or separate from the industrial plant 10, such as a standalone carbon capture system 100 used for direct air capture. Furthermore, the carbon capture system 100 also includes a heating source and a cooling source. Before discussing details of the gas treatment system 18, various aspects of the industrial plant 10 are discussed in further detail.

The gas turbine system 12 includes an air intake 50, a compressor 52 having one or more compressor stages, one or more combustors 54, a turbine 56 having one or more turbine stages, and a load 58 (e.g., electrical generator) driven by the turbine 56. In certain embodiments, the gas turbine system 12 further includes an exhaust gas recirculation (EGR) system 60 configured to recirculate an exhaust gas 62 into the air intake 50. The recirculated exhaust gas 62 helps to reduce the temperature and formation of certain emissions (e.g., nitrogen oxides (NOx)) associated with combustion in the combustors 54. In operation, the compressor 52 receives air (and also exhaust gas 62 if the EGR system 60 is active) from the air intake 50, and compresses the air 64 and/or exhaust gas 62 in one or more compressor stages (e.g., stages of rotating compressor blades). The combustors 54 then combust fuel from a fuel supply system with the compressed air and/or exhaust gas, and generate hot combustion gases. The hot combustion gases expand and drive one or more turbine stages (e.g., stages of rotating turbine blades) in the turbine 56, thereby driving rotation of the compressor 52 and the load 58 via shafts. The turbine 56 then outputs the hot combustion gases as the exhaust gas 62. The gas turbine system 12 may include a variety of piping to support the flow of intake air, compressed air (e.g., bleed air), one or more fuels (e.g., liquid fuel, gas fuel, etc.), additives for combustion, exhaust gas (e.g., exhaust gas recirculation), or other fluids.

The HRSG 16 recovers waste heat from the exhaust gas 62 to generate steam for driving the steam turbine system 14. The HRSG 16 includes a high-pressure (HP) steam section 70, an intermediate-steam (IP) section 72, and a low-pressure (LP) steam section 74 configured to generate HP steam 76, IP steam 78, and LP steam 80. The steam turbine system 14 may include an HP steam turbine 82 driven by the HP steam 76, an IP steam turbine 84 driven by the IP steam 78, and a LP steam turbine 86 driven by the LP steam 80. In addition to the steam provided by the HRSG 16, the HP steam turbine 82 provides IP steam to the IP steam turbine 84, and the IP steam turbine 84 provides LP steam to the LP steam turbine 86. The LP steam turbine 86 then outputs any remaining steam/water to a condensate line 88 coupled to the LP steam section 74 of the HRSG 16. The condensate line 88 may include a condenser 90 configured to condense any remaining steam to form a condensate, and a pump 92 configured to pump the condensate back to the LP steam section 74. In operation, the steam turbine system 14 drives a load 94 (e.g., electrical generator) via a shaft. In certain embodiments, the steam turbine system 14 and/or the HRSG 16 may provide heated water and/or steam (e.g., HP steam 76, IP steam 78, and/or LP steam 80) to the gas treatment system 18 to support a desorption mode of the one or more gas capture systems 20. For example, the gas capture systems 20 may receive heated water and/or steam in a temperature range of 100 to 150 degrees Celsius, 110 to 150 degrees Celsius, 120 to 150 degrees Celsius, or 130 to 150 degrees Celsius. The steam turbine system 14 and the HRSG 16 may include a variety of piping to support the flow of exhaust gas, steam, water, or other fluids, thereby facilitating waste heat recovery, steam generation, and steam power.

After the HRSG 16, the exhaust gas 62 may flow to the EGR system 60 and/or the gas treatment system 18. In the illustrated embodiment, the exhaust gas 62 flows through one or more gas capture systems 20 configured to capture undesirable gases. In some embodiments, the gas capture systems 20 may receive air 64 from an additional source (e.g., environment, fans, and the like). For example, the air 64 may be atmospheric air when the gas capture system 20 is configured as a direct air capture system. The undesirable gases from the exhaust gas 62 and/or the air 64 may include carbon oxides (CO_{X}) (e.g., carbon dioxide (CO₂) and carbon monoxide (CO)), nitrogen oxides (NO_{X}) (e.g., nitrogen dioxide (NO₂)), sulfur oxides (SO_{X}) (e.g., sulfur dioxide (SO₂)), or any combination thereof. In the following discussion, CO₂ may be used as an example of the undesirable gases; however, the gas capture systems 20 may be designed to capture any of the foregoing undesirable gases. For example, the gas capture systems 20 include one or more carbon capture systems 100 (e.g., CO₂ capture systems).

In some embodiments, the gas capture systems 20 (e.g., carbon capture systems 100) may include sorbent-based gas capture systems, solvent-based gas capture systems, cryogenic gas capture systems, or any combination thereof, configured to remove and capture undesirable gases. The carbon capture system 100 may include components 102, 104, 106, and 108 configured to enable gas capture of undesirable gases (e.g., CO₂) from the exhaust gas 62, thereby outputting a treated gas 110 and a captured gas 112 (e.g., CO₂). The treated gas 110 may be substantially free of the undesirable gases (e.g., CO₂) and may be discharged through an exhaust stack. The captured gas 112 (e.g., CO₂) may be compressed by a compression system 114 and stored and/or transported by a storage and/or pipeline system 116 for sequestration or other use such as, for example, greenhouses, beverage, chemical, concrete or fuel production. For example, the carbon capture systems 100 may include a post combustion capture (PCC) system that captures undesirable gases from the exhaust gas 62 and/or a direct air capture (DAC) system that captures undesirable gases from the air 64.

In certain embodiments, the carbon capture system 100 is a sorbent-based carbon capture system, and the components 102, 104, 106, and/or 108 include multiple sorbent-based carbon capture units (e.g., contactors or adsorbers having a sorbent material). In certain embodiments, the sorbent material may include porous, solid-phase materials, including mesoporous silicas, zeolites (e.g., aluminosilicates), and metal-organic frameworks (MOFs) and covalent organic frameworks (COFs). In certain embodiments, the carbon capture system 100 is a solvent-based carbon capture system, and the components 102, 104, 106, and/or 108 include one or more absorbers, strippers, and associated equipment. The carbon capture system 100 may include a variety of systems to support transitions between cycles of adsorption, desorption, cooling, and the like, thereby facilitating carbon capture.

In the illustrated embodiment, the controller 22 is configured to control all aspects of the industrial plant 10. The controller 22 includes one or more processors 120, memory 122, instructions 124 stored on the memory 122 and executable by the processor 120, and communication circuitry 126 configured to communicate with sensors and various equipment of the industrial plant 10. For example, the controller 22 is configured to receive sensor feedback from one or more sensors 128 coupled to the gas turbine system 12, the steam turbine system 14, the HRSG 16, and the gas treatment system 18 (e.g., gas capture systems 20), and/or additional components of the industrial plant 10 and control the same equipment based on the sensor feedback, operating modes, user input, computer models, or any combination thereof. The sensors 128 may include temperature sensors, pressure sensors, flow rate sensors, gas composition sensors, or any combination thereof.

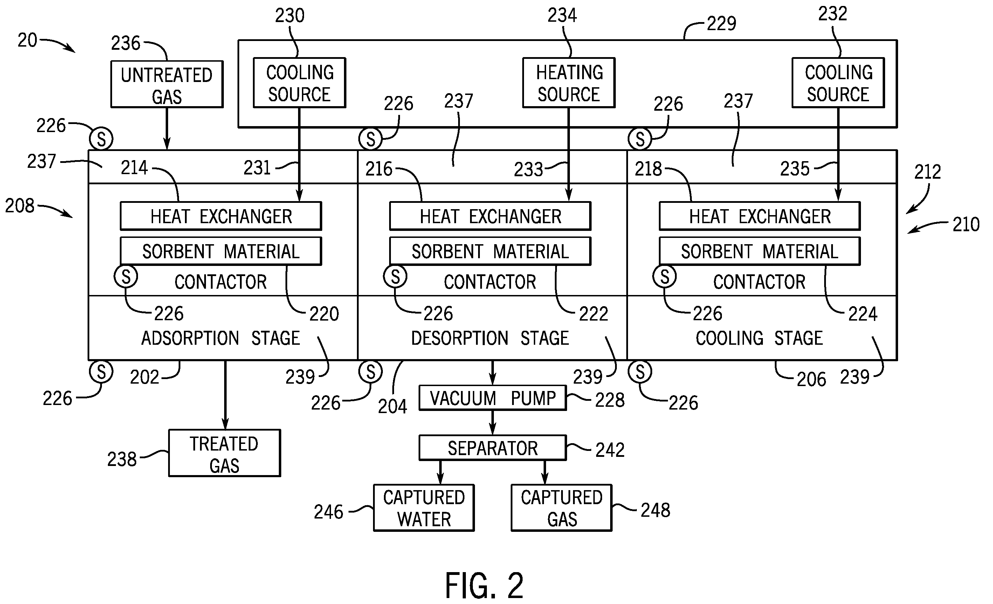

In certain embodiments, the controller 22 is configured to control operation of the gas capture systems 20 (e.g., carbon capture systems 100), such by controlling modes of operation (e.g., adsorption mode, desorption mode, and cooling mode), controlling heat sources for supplying heated fluid (e.g., steam) to the gas capture systems 20, controlling cooling sources for supply cooled fluids to the gas capture systems 20, vacuum pumps, or any combination thereof. In one example, the controller 22 may be communicatively coupled with a gas capture optimizer system 66. In certain embodiments, the gas capture optimizer 66 may be integrated into the controller 22 (e.g., processor 120). In certain embodiments, the controller 22, the gas capture optimizer 66, and/or the one or more sensors 128 of the industrial plant 10 may interface (e.g., input devices) with the carbon capture system 100 as shown in FIG. 2. In some embodiments, the controller 22 and/or the gas capture optimizer 66 may interface with one or more sensors 128 positioned within the gas capture system 20 (e.g., carbon capture system 100). In some embodiments, the controller 22 and/or the gas capture optimizer 66 may monitor the gas capture system (e.g., carbon capture system 100). Accordingly, the controller 22 and/or the gas capture optimizer 66 may adjust parameters of the carbon of the gas capture system 20 (e.g., carbon capture system 100) by controlling operation automatically in response to sensor feedback and/or operating parameters, in response to user/operator input or selections, or any combination thereof.

By way of example, FIG. 2 is a schematic of an embodiment of the gas capture system 20 (e.g., carbon capture system 100) of FIG. 1, further illustrating an adsorption stage 202, a desorption stage 204, and a cooling stage 206, each having a contactor or adsorber 208 with a sorbent material 210 (e.g., 220, 222, 224) coupled to a heat exchanger 212 (e.g., 214, 216, 218). In certain embodiments, the gas capture system 20 is designed as a temperature swing adsorption (TSA) system, a pressure swing adsorption system, a humidity swing adsorption system or a combination of temperature swing, pressure swing and humidity swing using temperature and/or pressure and/or humidity swings or changes to transitions between the stages 202, 204, and 206. The heat exchangers 212 (e.g., 214, 216, 218) may be controlled to remove or add heat relative to the sorbent materials 210 (e.g., 220, 222, 224) during transitions between operational stages of the gas capture system 20. The sorbent materials 210 (e.g., 220, 222, 224) are configured to adsorb or desorb gases in the adsorption and desorption stages 202 and 204, respectively.

In the illustrated embodiment, the gas capture system 20 has a plurality of contactors or adsorbers 208 with the sorbent materials 210 (e.g., 220, 222, 224) coupled to the heat exchangers 212 (e.g., 214, 216, 218) operating in parallel (e.g., simultaneously) with one another in different stages 202, 204, and 206. For example, the adsorber 208 having the heat exchanger 214 and sorbent material 220 is operating in the adsorption stage 202, the adsorber 208 having the heat exchanger 216 and sorbent material 222 is operating in the desorption stage 204, and the adsorber 208 having the heat exchanger 218 and the sorbent material 224 is operating in the cooling stage 206. As discussed in detail below, the controller 22 having the gas capture optimizer 66 is configured to control various operating parameters (e.g., temperature, pressure, humidity, cycle time, power consumption, etc.) for each of the different stages 202, 204, and 206, including the transition of each adsorber 208 in a sequence of the stages: (1) adsorption stage 202, (2) desorption stage 204, and (3) cooling stage 206. Thus, each of the adsorbers 208 progressively operates for a duration of time (or cycle) in each of the stages 202, 204, and 206. In certain embodiments, the gas capture system 20 may include 3, 4, 5, 6, 7, 8, 9, 10, or more adsorbers 208 operating in parallel (e.g., simultaneously) with at least one or more of the adsorbers 208 operating in each of the stages 202, 204, and 206 at all times, such that the adsorbers 208 are operating in a staggered manner in the stages 202, 204, and 206.

The gas capture system 20 may additionally include other equipment upstream, within, and/or downstream from the stages 202, 204, and 206. For example, the gas capture system 20 may include one or more sensors 226 (e.g., sensors 128 of FIG.1), designated as (S), positioned throughout the gas capture system 20. The one or more sensors 226 (e.g., temperature sensors, pressure sensors, humidity sensors, flow rate sensors, gas composition sensors, or any combination thereof) may measure parameters associated with the gas capture system 20. The sensors 226 may be used for control of the gas capture system 20, and particularly operating parameters (e.g., temperature, pressure, humidity, cycle time, power consumption, etc.) of the stages 202, 204, and 206. The gas capture system 20 may also include a vacuum pump 228 that may be disposed downstream from the desorption stage 204. The vacuum pump 228 may create a vacuum in the desorption stage 204 (e.g., in the heat exchanger 216) to remove water and gases from the desorption stage 204.

The gas capture system 20 may also include a fluid transfer system 229. The fluid transfer system 229 may be used to provide one or more fluids to the heat exchangers 212 (e.g., 214, 216, 218) for indirect heat transfer. The fluid transfer system 229 may include a cooling source 230, 232 and a heating source 234. One or more valves may control a flow of the fluids from the cooling source 230, 232 and the heating source 234 to the heat exchangers 212 (e.g., 214, 216, 218). The cooling source 230, 232 and the heating source 234 may include one or more fluid tanks, fluid pumps or compressors, valves, conduits, waste heat sources, water sources, steam sources, inert gas sources (e.g., nitrogen), heat exchangers, heaters, coolers, or any combination thereof. For example, the cooling source 230, 232 may include a cooling water, a refrigerant of a refrigerant cycle, a cooling gas (e.g., inert gas), a heating oil, or any combination thereof, being supplied from other parts of the industrial plant 10 and/or a cooling system. By further example, the heating source 234 may include a heating water, a steam, a heating gas (e.g., inert gas), or any combination thereof, being supplied from other parts of the industrial plant 10 and/or a heating system. For example, the heating source 234 may include heating water and/or steam from the steam turbine system 14 and/or the HRSG 16 as discussed above.

The adsorption stage 202 of the gas capture system 20 may be used to capture undesired gases (e.g., CO₂). For example, the adsorption stage 202 may receive an untreated gas 236 (e.g., untreated exhaust gas 62 and/or air 64) from an untreated gas supply (e.g., gas turbine system 12, HRSG 16, the atmosphere, direct air capture system, building interior, etc.), adsorb undesirable gases (e.g., CO₂) from the untreated gas into a sorbent material, and discharge a treated gas 238 (e.g., treated exhaust gas and/or treated air) with substantially less of the undesirable gases through a treated gas exhaust (e.g., exhaust stack). As shown, the untreated gas 236 may enter the gas capture system 20 via an inlet header 237 and the treated gas may exit through an outlet header 239. During the adsorption stage 202, cold fluid from the cooling source 230 of the fluid transfer system 229 may be present in and/or circulated through a heat exchanger 214. For example, the cooling source 230 may supply and/or circulate a cooling fluid via the heat exchanger 214 for indirect heat transfer (e.g., cooling) of the sorbent material 220 as indicated by arrow 231. The cooling fluid may include a liquid or gas (e.g., cooled water, refrigerant, oil, gas, etc.). In certain embodiments, the adsorption of undesirable gases into the sorbent material is an exothermic process, which causes an increase in temperature of the sorbent material. Accordingly, the cold fluid present during the adsorption stage 202 may be used to maintain a temperature of the untreated gas 236 and/or the sorbent material 220 below a threshold temperature for adsorption. The sorbent material may generally have reduced adsorption efficiency and/or capacity as the temperature increases, whereas the sorbent material may generally have increased adsorption efficiency and/or capacity as the temperature decreases.

In certain embodiments, the temperature of the untreated gas 236 and/or the sorbent material 220 may be controlled to be approximately 30 degrees Celsius or within a range of 20 to 40 degrees Celsius during the adsorption stage 202. However, the temperatures may vary depending on the particular untreated gas 236, sorbent material, undesirable gas, cooling systems, and other aspects of the gas capture system 20. It should be noted that in some embodiments, the cooling source 230 may be initiated to maintain a certain temperature or temperature range (e.g., between upper and lower temperature thresholds) within the heat exchanger 214 during the adsorption stage 202. Once the sorbent material 220 is saturated with the undesirable gas (e.g., CO₂), the gas capture system 20 may change an operating stage from the adsorption stage 202 to the desorption stage 204.

The desorption stage 204 may be initiated to desorb the undesirable gas from the sorbent material 222. Desorption may be initiated upon heating of the sorbent material 222 within the heat exchanger 216. As such, the gas capture system 20 may flow fluid from the heating source 234 of the fluid transfer system 229 to the heat exchanger 216. For example, the heating source 234 may supply and/or circulate a heating fluid directly through the heat exchanger 216 via indirect heat transfer (e.g., heating) of the sorbent material 222 as indicated by arrow 233. The indirect heat transfer may heat up the sorbent material 222 to a sufficient temperature range to cause desorption of the undesirable gases (e.g., CO₂) from the sorbent material 222. The heating fluid may include a liquid or gas (e.g., heated water, oil, steam, gas, etc.). The sorbent material may generally have increased desorption efficiency as the temperature increases, whereas the sorbent material may generally have decreased desorption efficiency as the temperature decreases.

In some embodiments, the heating source 234 is controlled to provide heating fluid (e.g., 233) to the heat exchanger 216 within a temperature range of 100 to 150 degrees Celsius, such that the sorbent material 222 heats up to a temperature range of 100 to 150 degrees Celsius. This allows undesirable gases (e.g., CO₂) previously adsorbed into the sorbent material 222 to be desorbed from the sorbent material 222 and output from the heat exchanger 216. Additionally, the vacuum pump 228 may be in direct communication with both the heat exchanger 216 and the separator 242, wherein the separator 242 may be positioned downstream from the vacuum pump 228. In this way, the separator 242 may separate gases from any moisture (e.g., water (H₂O)) in the extracted fluid, thereby outputting undesirable gases as captured gas 248 and the moisture as captured water 246. Thus, the vacuum pump 228 and the separator 242 operate to draw out the extracted fluid and separate the undesirable gases (e.g., CO₂) from the steam/water. Once the sorbent material 222 has released the undesirable gases beyond a threshold, the gas capture system 20 may change the operating stage from the desorption stage 204 to the cooling stage 206.

The cooling stage 206 may be initiated to cool the heat exchanger 218 between the desorption stage 204 and the adsorption stage 202 (e.g., an additional adsorption stage), such that the sorbent material 224 is within a desired temperature range (e.g., within upper and lower temperature thresholds). The cooling stage 206 may be initiated by controlling the cooling source 232 of the fluid transfer system 229 to provide cold fluid to the heat exchanger 218. The cold fluid may reduce a temperature of the heat exchanger 218 and sorbent material 224 to meet a desired temperature to initiate an additional adsorption stage. In certain embodiments, the cooling source 232 may supply and/or circulate a cooling fluid indirectly through the heat exchanger 218 for indirect heat transfer (e.g., cooling) of the sorbent material 224 as indicated by arrow 235. For indirect heat transfer via a fluid flow indicated by arrow 235, the cooling fluid may include a liquid or gas (e.g., cooled water, oil, refrigerant, gas, etc.).

The one or more sensors 226 may be positioned through various parts of the adsorption stage 202, the desorption stage 204, and the cooling stage 206. For example, the one or more sensors 226 may be disposed near and/or within the untreated gas 236 and provide sensor feedback and/or measurements associated with temperature, pressure, flow rate, gas composition (e.g., % of inlet CO₂, % of inlet H₂O), air inlet condition, inlet gas flow, or any combination thereof. The one or more sensors 226 may also monitor temperature fluctuations with respect to the fluid transfer system 229 (e.g., cooling source 230, 232 and heating source 234), thereby providing temperature feedback associated with the fluids. In another example, the one or more sensors 226 may be positioned near and/or within the heat exchangers 212 (e.g., 214, 216, 218) to provide sensor feedback (e.g., temperature, pressure, humidity, flow rate, fluid composition, etc.) relating to the undesirable gas (e.g., CO₂) being adsorbed by and desorbed from the sorbent materials 210 (e.g., 220, 222, 224). In another example, the one or more sensors 226 may be positioned near, within, and/or in contact with the sorbent materials 210 (e.g., 220, 222, 224), thereby providing sensor feedback (e.g., temperature) relating to the sorbent materials 210 (e.g., 220, 222, 224). In certain embodiments, the one or more sensors 226 may monitor parameters (e.g., temperature, pressure, humidity, flow rate, gas composition, sorbent utilization, vacuum condition, power consumption) of the heat exchangers 212 (e.g., 214, 216, 218), sorbent material 210 (e.g., 220, 222, 224), untreated gas, or a combination thereof. The one or more sensors 226 may be disposed near and/or within the treated gas 238 or vacuum pump 228 and provide sensor feedback and/or measurements associated with temperature, pressure, humidity, flow rate, gas composition (e.g., % of outlet CO₂, % of outlet H₂O), air inlet condition, inlet gas flow, vacuum condition, power consumption, or any combination thereof. In some embodiments, additional sensors may be present near and/or within the separator 242, a component receiving captured water 246, and a component receiving captured gas 248. In this way, the gas capture optimizer 66 may utilize the sensor feedback provided by the one or more sensors 226 to adjust parameters of the gas capture system 20 (e.g., carbon capture system 100), thereby improving energetics of the gas treatment system.

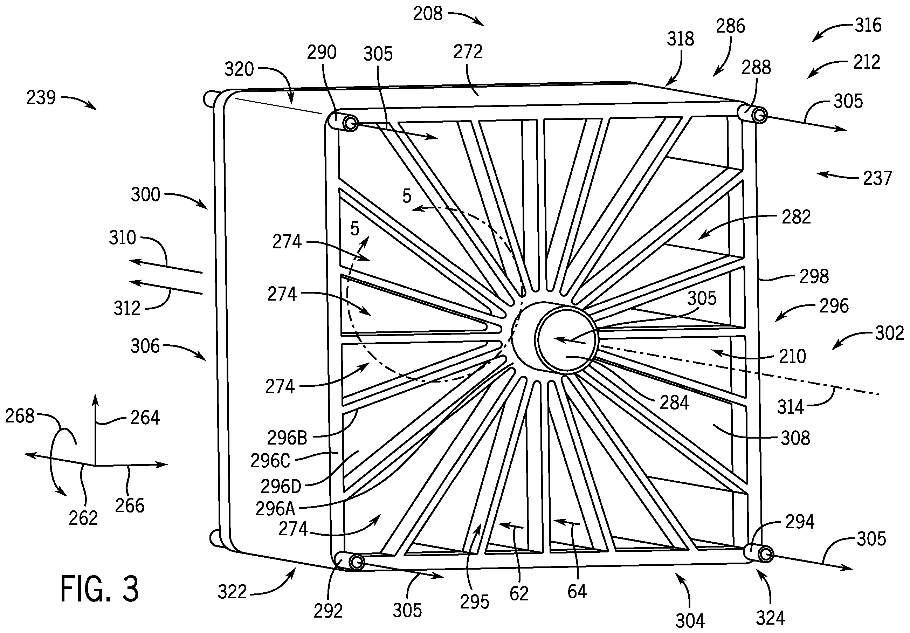

FIG. 3 is a perspective view of an embodiment of the gas capture system 20 (e.g., sorbent-based gas capture system) of FIGS. 1 and 2, further illustrating an embodiment of the adsorber 208 having the sorbent material 210 coupled to the heat exchanger 212. For purposes of orientation in the drawings, reference may be made to an axial direction or axis 262, a radial direction or axis 264 (e.g. vertical direction), a radial direction or axis 266 (e.g., lateral or horizontal direction), and a circumferential direction or axis 268 extending circumferentially around the axial direction or axis 262. As shown, the heat exchanger 212 includes an outer shell 272 and a plurality of inner shells 274 disposed in an interior 282 of the outer shell 272. The heat exchanger 212 includes an inner conduit 284 (e.g., central conduit) and one or more outer conduits 286 (e.g., conduits 288, 290, 292, 294). As illustrated, the inner shells 274 may include a plurality of radial segments or inner shells (e.g., wedge-shaped or truncated pie-shaped segments or inner shells) projecting radially outward from the inner conduit 284 to the outer shell 272. The heat exchanger 212 also includes a plurality of channels 295 that border the plurality of inner shells 274.

In operation, a plurality of gas flow paths extend internally through the plurality of inner shells 274 (e.g., gas conduits and/or vacuum chambers), whereas a plurality of thermal fluid flow paths (e.g., cooling and/or heating fluid flow paths) extend through the inner conduit 284, the plurality of channels 295 (e.g., formed by the plurality of inner shells 274), and the outer conduits 286. As discussed above with reference to FIG. 2, the heat exchanger 212 may be used cool the sorbent material 210 using the thermal fluid flow paths (e.g., cold or cooled thermal fluid) during the adsorption stage 202, heat the sorbent material 210 using the thermal fluid flow paths (e.g., hot or heated thermal fluid) during the desorption stage 204, and/or cool the sorbent material 210 using the thermal fluid flow paths (e.g., cold or cooled thermal fluid) during the cooling stage 206. In certain embodiments, the sorbent material 210 may adsorb one or more undesirable gases at an ambient temperature during the adsorption stage 202.

Additionally, the heat exchanger 212 includes a plurality of end plates 296 (e.g., end plates 298, 300) disposed on axial ends or sides 302 (e.g., axial ends or sides 304, 306) of the heat exchanger 212. As shown, the end plates 296 are coupled to both the outer shell 272 and the plurality of inner shells 274. As discussed herein, the end plates 296 are configured to close off (e.g., terminate) and seal a fluid flow 305 (e.g., thermal fluid flow) from the plurality of channels 295 through the axial sides 302 of the heat exchanger 212, while enabling gas flow and/or vacuum through the plurality of inner shells 274. The end plates 296 include a central annular cover portion 296A disposed about the inner conduit 284, a plurality of radial cover portions 296B projecting radially outward from the central annular cover portion 296A, and a rectangular outer cover portion 296C coupled to the plurality of radial cover portions 296B, containing the fluid flow 305 along the plurality of channels 295. In operation, the fluid flow 305 may flow in an axial direction through the inner conduit 284, a plurality of radial directions in spaces between the plurality of inner shells 274, a plurality of lateral directions between the outer shell 272 and outer sides of the plurality of inner shells 274, and an axial direction through the outer conduits 286. The end plates 296 block axial flows out of the heat exchanger 212, except for the axial flows provided by the inner conduit 284 and the outer conduits 286. The end plates 296 also include a plurality of wedge-shaped openings 296D (e.g., truncated pie-shaped openings) in fluid communication with an interior of the plurality of inner shells 274, wherein the plurality of wedge-shaped openings 296D are defined by the cover portions 296A, 296B, and 296C of the end plates 296. The plurality of wedge-shaped openings 296D enable axial flows (e.g., gas or vacuum) through the plurality of inner shells 274.

The fluid flow 305 may include a heat transfer or thermal fluid, such as water, steam, oil, one or more water treatments (e.g., antifreeze, corrosion inhibitors, pH control, etc.), or a combination thereof. The fluid flow 305 may be a hot or heated fluid during the desorption stage 204, whereas the fluid flow 305 may be a cold or cooled fluid during the adsorption stage 202 and the cooling stage 206. The heat exchanger 212 generally surrounds each of the inner shells 274 with the fluid flow 305 along a central axis 314. In certain embodiments, the fluid flow 305 may be at an ambient temperature during the adsorption stage 202.

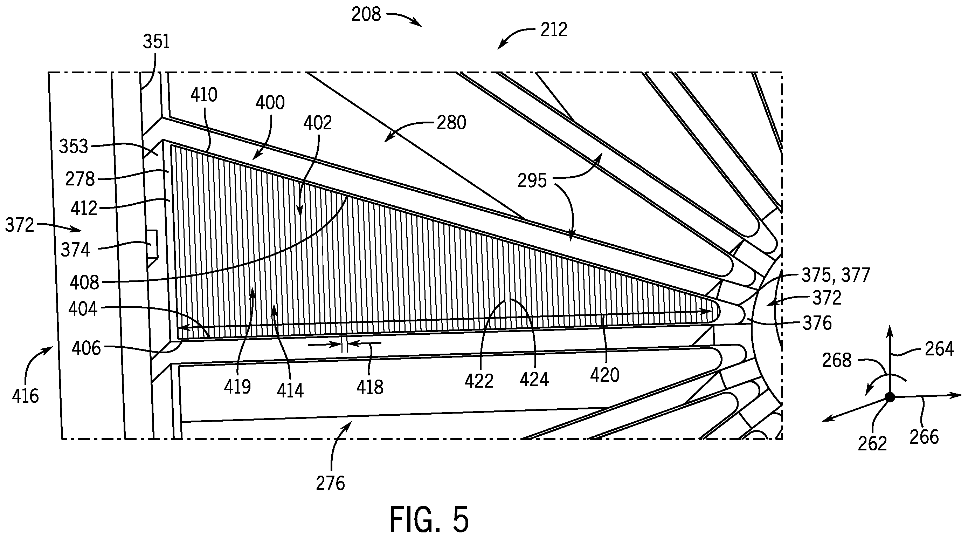

The plurality of inner shells 274 is configured to enable a gas flow and/or vacuum in an axial direction along the central axis 314. Although not shown in FIG. 3 for purposes of simplicity, the plurality of inner shells 274 may include a plurality of fins 400 as shown in FIG. 5. During the adsorption stage 202, the plurality of inner shells 274 is configured to receive the exhaust gas 62 and/or the air 64 from the axial side 304 of the heat exchanger 212 through the inlet header 237. During the desorption stage 204 and the cooling stage 206, the plurality of inner shells 274 may receive a sweep fluid flow and/or a vacuum to assist with the desorption and/or cooling of the sorbent material 210. For example, the sweep fluid flow may include an inert gas (e.g., nitrogen), carbon dioxide, steam, or any combination thereof. By further example, the vacuum pump 228 may be configured to create and hold a vacuum in the plurality of inner shells 274 of the heat exchanger 212. In this manner, the plurality of inner shells 274 may define internal vacuum chambers and/or passages integrally formed within the heat exchanger 212. Thus, the adsorber 208 may exclude any external vacuum chambers, such as a vacuum vessel surrounding the heat exchanger 212.

The plurality of inner shells 274 includes one or more surfaces 308 (and optionally fins 400 as shown in FIG. 5) coated with the sorbent material 210 for adsorption of undesirable gases during the adsorption stage 202 and desorption of the undesirable gases during the desorption stage 204. In certain embodiments, the inner shells 274 (and optionally the fins 400 as shown in FIG. 5) may be composed of the sorbent material 210. As the exhaust gas 62 and/or the air 64 passes through the plurality of inner shells 274 during the adsorption stage 202, one or more undesirable gases in the exhaust gas 62 and/or the air 64 is adsorbed into the sorbent material 210. As the sweep gas flows and/or a vacuum pressure is created in the plurality of inner shells 274 during the desorption stage 204, one or more undesirable gases is desorbed from the sorbent material 210 for capture and treatment as described in FIGS. 1 and 2. Additionally or alternatively, the fluid flow 305 (e.g., heated fluid flow) may flow through the channels 295 during the desorption stage 204 to at least partially facilitate desorption of one or more undesirable gases from the sorbent material 210. It may be appreciated that the plurality of inner shells 274 provide increased surface area, thereby enabling more undesirable gases to be adsorbed into the sorbent material 210 due to the exhaust gas 62 and/or air 64 contacting more sorbent material 210. As shown, a depleted exhaust gas 310 and/or air 312 exits from the axial side 306 of the heat exchanger 212 during the adsorption stage 202 through the outlet header 239. Additionally, it may be appreciated that separation between the inner shells 274 and the outer shell 272 may decrease manufacturing costs by reducing the amount of machining performed after extrusion of the inner shells 274 and the outer shell 272.

In the illustrated embodiment, the outer shell 272 and the plurality of inner shells 274 are prismatic in shape. As shown, the outer shell 272 is rectangular prismatic in shape. In certain embodiments, the outer shell 272 may be cylindrical, triangular prismatic, hexagonal prismatic, or the like. In the illustrated embodiment, the inner conduit 284 and the outer shell 272 share the central axis 314 in a coaxial arrangement. Additionally or alternatively, the outer conduits 286 are disposed along corners 316 (e.g., corners 318, 320, 322, 324) of the heat exchanger 272. As shown, the inner conduit 284 is an inlet conduit, and the outer conduits 286 are outlet conduits. That is, the heat exchanger 272 is configured to receive the fluid flow 305 (e.g., water, oil, refrigerant, etc.) from the inner conduit 284 and output the fluid flow 305 from the outer conduits 286, such that the fluid flow 305 travels from the inner conduit 284 to the outer conduits 286. In certain embodiments, the outer conduits 286 may be inlet conduits and the inner conduit 284 may be an outlet conduit. That is, the fluid flow 305 may travel radially inward from the outer conduits 286 to the inner conduit 284.

In the illustrated embodiment, the heat exchanger 212 includes one inner conduit 284 and four outer conduits 286. In certain embodiments, the heat exchanger 212 may include one or more inner conduits 284 and/or outer conduits 286. For example, the heat exchanger 212 may include 2, 3, 4, or more inner conduits 284 and/or 1, 2, 3, 5, 6, or more outer conduits 286.

The outer shell 272, the plurality of inner shells 274, or a combination thereof, may include a single extrude piece and/or a plurality of extruded pieces, which are extruded axially along the central axis 314. That is, the outer shell 272 and/or the plurality of inner shells 274 may be contiguously extruded pieces manufactured via an extrusion manufacturing technique (e.g., extruding material through a die, additive manufacturing, three-dimensional (3D) printing, etc.). In certain embodiments, the outer shell 272 and/or the inner shells 274 may be composed of a thermally conductive material (e.g., metal, metallic alloy, aluminum, copper, etc.). Additionally, the sorbent material 210 may be applied to one or more surfaces within an interior of the plurality of inner shells 274 via one or more coating procedures (e.g., spraying, dipping, etc.). In certain embodiments, using extrusion for manufacturing, the heat exchanger 272 may have a uniform cross-section extending axially along the central axis 314 for each of the outer shell 272, the plurality of inner shells 274, and the inner conduit 284.

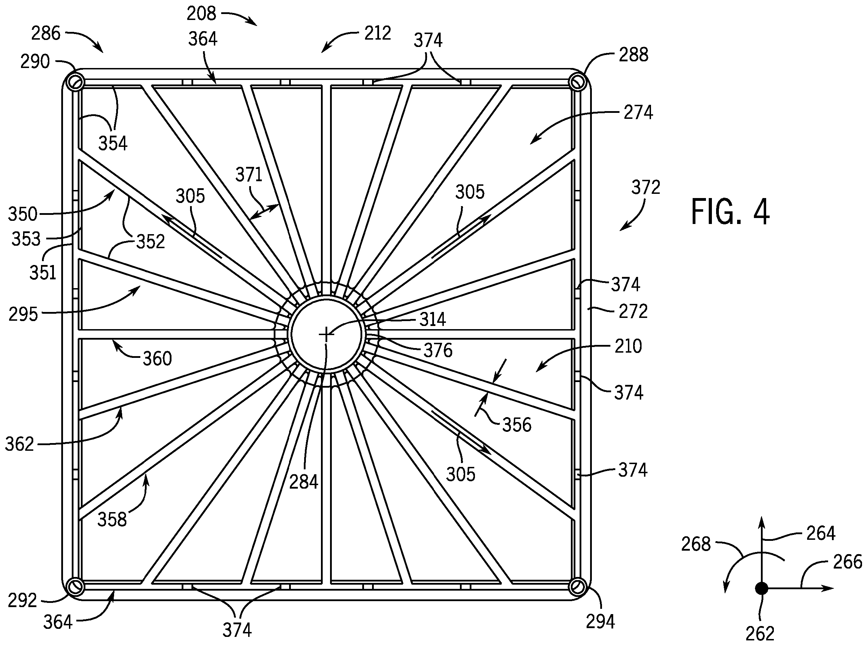

FIG. 4 is a side cross-sectional view of an embodiment of the gas capture system 20 (e.g., sorbent-based gas capture system) of FIGS. 1-3, further illustrating the adsorber 208 of FIG. 3 with the end plates 296 removed to illustrate internal components and flow paths of the heat exchanger 212. As shown, the plurality of channels 295 are defined by one or more spaces 350 (e.g., radial spaces 352 and outer rectangular space 354) disposed between the plurality of inner shells 274, the outer shell 272, or a combination thereof. For example, the radial spaces 352 extend radially from the inner conduit 284 to the outer shell 272 between each adjacent pair of inner shells 274. By further example, the outer rectangular space 354 extends between an inner surface 351 of the outer shell 272 and radial outer surfaces 353 of the inner shells 274. In the illustrated embodiment, the plurality of channels 295 are fluidly coupled to the inner conduit 284 and to the outer conduits 286. The plurality of channels 295 is configured to receive the fluid flow 305 from the inner conduit 284 and eject the fluid flow 305 through the outer conduits 286. The plurality of channels 295 are proximate to the plurality of inner shells 274, such that the fluid flow 305 flowing through the plurality of channels 295 is placed in an indirect heat exchange relationship with the sorbent material 210 disposed on various internal surfaces within the inner shells 274. The plurality of channels 295 substantially surround an exterior (e.g., external surfaces) of the inner shells 274, such that the inner shells 274 are surrounded by the fluid flow 305 rather than a vacuum chamber. Instead, the inner shells 274 internally flow an untreated gas during the adsorption stage, and internally flow a sweep gas or contain a vacuum pressure during the desorption stage.

In the illustrated embodiment, a width 356 of the plurality of channels 295 is substantially uniform. That is, each of the channels 295 throughout the heat exchanger 212 have substantially the same width 356. As discussed herein, the channels 295 are defined by one or more spaces 350 between the plurality of inner shells 274, the outer shell 272, or both, such that the width 356 is based on the shape of one or more inner shells 274, an arrangement of the plurality of inner shells 274, or both.

In the illustrated embodiment, the plurality of channels 295 include radial channels 358 defined by the radial spaces 352 and outer channels 364 defined by the outer rectangular space 354. As shown, the radial channels 358 extend radially in a radial direction 370 from the inner conduit 284 towards the outer shell 272. The outer channels 364 are disposed within the outer shell 272 and are fluidly coupled to the radial channels 358. As shown, one or more of the outer channels 364 are fluidly coupled to the outer conduits 286.

In the illustrated embodiment, the angular spacing between the channels 295 is uniform. As shown, an angle 371 between successive channels 295 is between 17 and 19 degrees. In certain embodiments, the angle 371 may be less than 45, 30, 15, 10, 5, 3, 2, or 1 degrees. In certain embodiments, the spacing between successive channels 295 may not be uniform. In the illustrated embodiment, there are 20 radial channels 258 that extend outward from the inner conduit 284. In certain embodiments, there may be fewer or more than twenty radial channels 358. For example there may be 2, 4, 6, 8, 10, 20, 40, or more radial channels 358.

In the illustrated embodiment, the outer channels 364 are at least partially supported by a plurality of supports 372 (e.g., outer supports 374 and inner supports 376). The supports 372 may define the width 356 of the plurality of channels 295 (e.g., radial channels 358 and outer channels 364) and guide the inner shells 274 into correct positions with the heat exchanger 212 between the inner conduit 284 and the outer shell 272. For example, the supports 372 (e.g., 374, 376) may include mating guides or keys, such as male and female joints, male and female rail structures, and/or protrusions and slot structures, which mate with one another in an axial direction along the central axis 314. The supports 372 are shown in further detail with reference to FIG. 5. The outer supports 374 are disposed between the inner surface 351 of the outer shell 272 and the radial outer surfaces 353 of the inner shells 274. The inner supports 376 are disposed between an outer surface 375 of the inner conduit 284 and a radial inner surface 377 of the inner shell 274, as shown in FIG. 5. In certain embodiments, the supports 372 are sized and/or shaped differently to ensure proper positioning of each of the inner shells 274 between the outer shell 272 and the inner conduit 284. In certain embodiments, the supports 372 may be omitted such that the outer channels 364 are fluidly coupled to each other along the axial direction 262 of the heat exchanger 212.

In the illustrated embodiment, the outer shell 272 has a square cross-sectional shape. In certain embodiments, the outer shell 272 may have a triangular cross-sectional shape, a circular cross-sectional shape, a hexagonal cross-sectional shape, or the like. As described in FIG. 3, end plates 296 may be coupled to the outer shell 272 and the plurality of inner shells 274 to block an egress of the fluid flow 305 from the channels 295 from either axial ends of the heat exchanger 212. Thus, the end plates 296 ensure that the fluid flow 305 passes radially between the inner shells 274, whereas the gas flow passes axially through the inner shells 274.

FIG. 5 is a close-up view of an area 5-5 in FIG. 3, further illustrating an embodiment of the heat exchanger 212 having a plurality of fins 400. In certain embodiments, each of the inner shells 274 includes the plurality of fins 400 with the sorbent material 210 to enable adsorption and desorption of undesirable gases (e.g., CO₂). For purposes of simplicity, the illustrated embodiment depicts the plurality of fins 400 within an interior 402 of inner shell 274, 278, although various embodiments of the heat exchanger 212 may include the fins 400 in all, some, or none of the inner shells 274. As shown, the fins 400 extend from a first inner surface 404 of a first wall 406 (e.g., radial wall) of the inner shell 274, 278 to a second inner surface 408 of a second wall 410 (e.g., radial wall) of the inner shell 274, 278. In the illustrated embodiment, the fins 400 are arranged in the circumferential direction 268, such that the fins 400 are generally crosswise to the first and second walls 406 and 410 and parallel with a third wall 412 of the inner shell 274, 278. However, in some embodiments, the fins 400 may be arranged generally parallel to the first and second walls 406 and 410 and crosswise with the third wall 412 of the inner shell 274, 278.

In the illustrated embodiment, inner shells 276 and 280 do not include fins 400. In certain embodiments, each of the inner shells 274 may include fins 400 as shown within the inner shell 278. In certain embodiments, the fins 400 in each of the inner shells 274 may be directed along the circumferential direction 268 as shown within the inner shell 278. In certain embodiments, the fins 400 may be normal to a wall of each respective inner shell 274. For example, in the illustrated embodiment, the fins 400 are substantially normal (e.g., perpendicular, orthogonal, etc.) to the first wall 406 of the inner shell 278. In certain embodiments, the fins 400 may be oriented in another direction. For example the fins 400 may be normal to the third wall 412 of the inner shell 278. In certain embodiments, the fins 400 may axially extend from a first axial side 414 of the inner shells 274 to a second axial side 416 of the inner shells 274. In certain embodiments, the fins 400 may partially extend between the first axial side 414 and the second axial side 416.

In the illustrated embodiment, a ratio between a spacing 418 between consecutive fins 400 and a length 420 of the first inner surface 404 is between 1:200 and 1:50. In certain embodiments, the ratio between the spacing 418 and the length 420 may be less than 1:20, 1:30, 1:40, 1:50, 1:100, 1:200, or 1:500. It may be appreciated that the close spacing of the fins 400 may contribute to maintaining a vacuum within the inner shells 274 during the desorption stage 204, thereby foregoing a dedicated the added cost of a dedicated vacuum chamber around an exterior of the heat exchanger 212.

In certain embodiments, one or more of the inner shells 274 may include less than 1000, 500, 250, 100, or 50 fins 400. It may be appreciated that the fins 400 may increase a surface area that is coated with the sorbent material 210. In certain embodiments, an outer surface 422 of the fin 400, and inner surface 424 of the fin 400, or both may be coated with the sorbent material 210. In certain embodiments, less than 100 percent, 90 percent, 80 percent, 70 percent, or 60 percent of the outer surface 422 and/or the inner surface 424 of the fins 400 may be coated with the sorbent material 210. In certain embodiments, inner shell 274 may be formed of a porous material and sorbent 210 is coated throughout at least a portion of the porous area.

The heat exchanger 212 may be formed in one or more one-piece extruded or 3D printed bodies, which may be extruded axially along the central axis 314. For example, the outer shell 272, the inner shells 274, and the inner conduit 284 may be extruded independently or combined with one another in various combinations. In some embodiments, each of the inner shells 274 is extruded independently with or without the fins 400. For example, each inner shell 274 and its fins 400 may be extruded together as a one-piece extruded body, such that a cross-sectional area of the inner shell 274 and its fins 400 is constant in the axial direction 262 along an axial length thereof. By further example, each inner shell 274 may be extruded separately from its fins 400 to define a one-piece extruded body of the inner shell 274, whereas each set of fins 400 for a particular inner shell 274 may be extruded as its own one-piece extruded body. In such an embodiment, the set of fins 400 (one-piece extruded body) may be inserted and secured (e.g., fixedly or removably mounted) within a corresponding inner shell 274. In some embodiments, the set of fins 400 is made entirely of the sorbent material 210 or is made of a thermally conductive material (e.g., one-piece extruded body of metal) coated with the sorbent material 210. In some embodiments, the fins 400 and an interior surface of the inner shell 274 is coated with the sorbent material 210 via spray coating, flow coating, dipping, or another suitable coating technique.

As illustrated in FIG. 5, each of the inner shells 274 may be supported within the heat exchanger 212 via the supports 372, such as outer supports 374 and inner supports 376. The outer supports 374 disposed between the inner surface 351 of the outer shell 272 and the radial outer surfaces 353 of the inner shells 274. The inner supports 376 are disposed between an outer surface 375 of the inner conduit 284 and a radial inner surface 377 of the inner shell 274. These supports 372 help to hold the plurality of inner shells 274 in property orientations and spacings within the heat exchanger 212, thereby defining the various channels 295 therebetween.

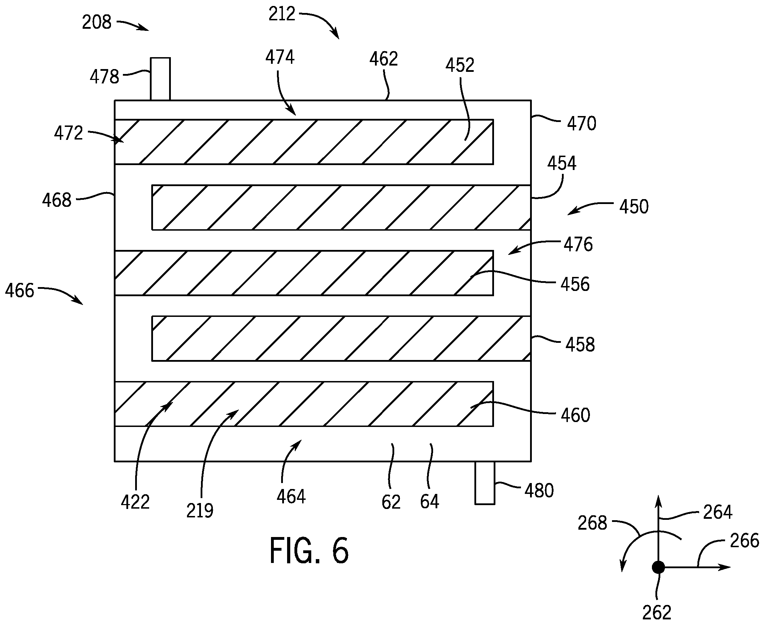

FIG. 6 is a schematic view of an embodiment of the gas capture system 20 (e.g., sorbent-based gas capture system) of FIGS. 1 and 2, further illustrating the adsorber 208 having the heat exchanger 212 with a staggered arrangement of rectangular gas passages 450 (e.g., rectangular gas passages 452, 454, 456, 458, 460). The rectangular gas passage 450 may be inner shells similar to the inner shells 274 of FIGS. 3-5. In the illustrated embodiment, the heat exchanger 212 includes an outer shell 462 and the rectangular gas passages 450 are disposed in an interior 464 of the outer shell 462. As shown, the rectangular gas passages 450 are coupled to side walls 466 (e.g., side walls 468, 470) of the outer shell 462 in an alternating manner. For example, the rectangular gas passage 452 is coupled to the side wall 468, the rectangular gas passage 454 is coupled to the side wall 470, and the rectangular gas passage 456 is coupled to the side wall 468. The rectangular gas passages 450 may be configured to receive the untreated gas 236 (e.g., air 64 and/or exhaust gas 62) during the adsorption stage 202 or the sweep gas and/or vacuum pressure during the desorption stage 204. Additionally or alternatively, the rectangular gas passages 450 may include a plurality of fins 472 coated with the sorbent material 210 for capturing undesirable gases from the untreated gas 236 (e.g., air 64 and/or the exhaust gas 62).

As shown, the heat exchanger 212 includes a channel 474 (e.g., thermal fluid channel) defined by the space 476 between the rectangular gas passages 450 and the outer shell 462. The heat exchanger 270 also includes a fluid inlet 478 and a fluid outlet 480 fluidly coupled to the channel 474. The channel 474 is configured to transport the fluid flow 305 from the fluid inlet 478 to the fluid outlet 480 through the channel 480, thereby placing the fluid flow 305 in an indirect heat exchange relationship with the sorbent material 210 disposed in the rectangular air passages 450. The channel 474 substantially surrounds the rectangular gas passages 450, such that the rectangular gas passages 450 are surrounded by a thermal fluid rather than a vacuum chamber. Instead, during the desorption stage 204 and/or the cooling stage 206, a vacuum pressure may be applied to the rectangular gas passages 450.

The heat exchanger 212 may be formed in one or more one-piece extruded or 3D printed bodies, which may be extruded axially along the central axis 314. For example, the outer shell 462 and the rectangular gas passages 450 may be extruded independently or combined with one another in various combinations. In some embodiments, each of the rectangular gas passages 450 is extruded independently with or without the fins 472. For example, each rectangular gas passage 450 and its fins 472 may be extruded together as a one-piece extruded body, such that a cross-sectional area of the rectangular gas passage 450 and its fins 472 is constant in the axial direction 262 along an axial length thereof. By further example, each rectangular gas passage 450 may be extruded separately from its fins 472 to define a one-piece extruded body of the rectangular gas passage 450, whereas each set of fins 472 for a particular rectangular gas passage 450 may be extruded as its own one-piece extruded body. In such an embodiment, the set of fins 472 (one-piece extruded body) may be inserted and secured (e.g., fixedly or removably mounted) within a corresponding rectangular gas passage 450. In some embodiments, the set of fins 472 is made entirely of the sorbent material 210 or is made of a thermally conductive material (e.g., one-piece extruded body of metal) coated with the sorbent material 210. In some embodiments, the fins 472 and an interior surface of the rectangular gas passage 450 is coated with the sorbent material 210 via spray coating, flow coating, dipping, or another suitable coating technique.

Technical effects of the disclosed embodiments include a modular heat exchanger that can be manufactured via extrusion (e.g., additive manufacturing, forcing material through a die, etc.), thereby decreasing manufacturing costs and improving scalability. The heat exchanger includes an outer shell and separate inner shells that are extruded separately, thereby reducing machining costs post-extrusion. The inner shells include a plurality of fins that increase surface area for the sorbent material, thereby increasing a quantity of undesirable gases that may be removed from the received air and/or exhaust gas. Additionally, it may be appreciated that the inner shells having the fins may facilitate the formation of a vacuum inside the inner shells to be used during the desorption stage of the carbon capture cycle, thereby removing the need for a dedicated vacuum chamber.

The subject matter described in detail above may be defined by one or more clauses, as set forth below.

According to a first aspect, a system includes a sorbent-based gas capture system configured to capture an undesirable gas from a gas flow. The sorbent-based gas capture system includes one or more adsorbers. The one or more adsorbers include a heat exchanger. The heat exchanger includes an outer shell, a plurality of inner shells disposed inside the outer shell, and a plurality of channels defined by one or more spaces disposed between at least two of the plurality of inner shells, at least one of the plurality of inner shells and the outer shell, or a combination thereof. The plurality of inner shells is configured to receive the gas flow during an adsorption stage. The plurality of channels is configured to receive a fluid flow. The heat exchanger also includes a sorbent material disposed on one or more surfaces within the plurality of inner shells. The sorbent material is configured to remove the undesirable gas from the gas flow during the adsorption stage.

The system of the preceding clause, wherein each of the plurality of inner shells includes a one-piece extruded body.

The system of any preceding clause, wherein each of the plurality of inner shells includes a plurality of fins disposed within a gas flow path of the gas flow, and the sorbent material at least partially covers or forms the plurality of fins.

The system of any preceding clause, including a plurality of supports holding the plurality of inner shells in a spaced arrangement relative to one another to define the plurality of channels via an exterior surface of an outer wall of the plurality of inner shells.

The system of any preceding clause, wherein the plurality of inner shells include a plurality of radial inner shells projecting radially outward relative to a central axis.

The system of any preceding clause, wherein the plurality of radial inner shells extend radially between an inner conduit and the outer shell, the plurality of channels includes a plurality of radial channels between adjacent walls of the plurality of radial inner shells, and the plurality of radial channels are fluidly coupled to the inner conduit.

The system of any preceding clause, wherein the outer shell includes a rectangular outer shell, the inner conduit includes an annular inner conduit, and the plurality of radial inner shells includes a plurality of wedge-shaped inner shells.

The system of any preceding clause, wherein the plurality of inner shells includes a plurality of rectangular inner shells, the outer shell includes a rectangular outer shell, and the plurality of rectangular inner shells are disposed in a staggered arrangement within the rectangular outer shell.

The system of any preceding clause, including first and second end plates disposed over opposite first and second axial ends of the heat exchanger relative to a central axis, wherein each of the first and second end plates covers and seals the plurality of channels, the first end plate includes inlet openings fluidly coupled with one or more gas inlets into the plurality of inner shells, and the second end plate includes outlet openings fluidly coupled with one more gas outlets out of the plurality of inner shells.

The system of any preceding clause, including a one-piece extruded body forming the outer shell, one or more inner shells of the plurality of inner shells, or a combination thereof.

The system of any preceding clause, wherein the outer shell, the plurality of inner shells, or a combination thereof, are prismatic in shape.

The system of any preceding clause, wherein the plurality of channels includes a uniform width based on: a shape of one or more inner shells of the plurality of inner shells; an arrangement of the plurality of inner shells; or a combination thereof.

The system of any preceding clause, wherein the sorbent-based gas capture system includes a vacuum coupled to the plurality of inner shells, wherein the vacuum is configured to create a vacuum pressure within the plurality of inner shells during a desorption stage.

According to a second aspect, system includes a plurality of inner shells configured to mount inside of an outer shell of a heat exchanger of an adsorber of a sorbent-based gas capture system. The plurality of inner shells is configured to receive a gas flow during an adsorption stage. The system also includes a sorbent material disposed on one or more surfaces of the plurality of inner shells. The sorbent material is configured to remove an undesirable gas from the gas flow during the adsorption stage.

The system of the preceding clause, including: the outer shell; the plurality of inner shells disposed inside of the outer shell; and one or more channels defined by a separation between at least two of the plurality of inner shells, between at least one of the plurality of inner shells and the outer shell, or a combination thereof, wherein the one or more channels are configured to receive a fluid flow.

The system of any preceding clause, wherein the plurality of inner shells includes a plurality of fins disposed within a gas flow path of the gas flow, and the sorbent material at least partially covers or forms the plurality of fins.

The system of any preceding clause, wherein a one-piece extruded body forms the plurality of inner shells and the plurality of fins.

The system of any preceding clause, wherein the plurality of inner shells includes a wedge-shaped inner shell.

According to a third aspect, a method includes extruding an outer shell of a heat exchanger for a sorbent-based gas capture system, a plurality of inner shells of the heat exchanger, or a combination thereof. The method also includes applying a sorbent material to one or more surfaces of the plurality of inner shells. The method also includes arranging the plurality of inner shells in an interior of the outer shell. One or more fluid channels are defined by a separation between the plurality of inner shells, the outer shell, or a combination thereof.

The method of the preceding clause, including coupling the plurality of inner shells to a vacuum configured to create a vacuum pressure within the plurality of inner shells during a desorption stage.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system, comprising:
a sorbent-based gas capture system configured to capture an undesirable gas from a gas flow, wherein the sorbent-based gas capture system comprises one or more adsorbers comprising:
a heat exchanger, comprising:
an outer shell;
a plurality of inner shells disposed inside the outer shell, wherein the plurality of inner shells is configured to receive the gas flow during an adsorption stage;
a plurality of channels defined by one or more spaces disposed between at least two of the plurality of inner shells, between at least one of the plurality of inner shells and the outer shell, or a combination thereof, wherein the plurality of channels is configured to receive a fluid flow; and
a sorbent material disposed on one or more surfaces within the plurality of inner shells, wherein the sorbent material is configured to remove the undesirable gas from the gas flow during the adsorption stage.

2. The system of claim 1, wherein each of the plurality of inner shells comprises a one-piece extruded body.

3. The system of claim 1, wherein each of the plurality of inner shells comprises a plurality of fins disposed within a gas flow path of the gas flow, and the sorbent material at least partially covers or forms the plurality of fins.

4. The system of claim 1, comprising a plurality of supports holding the plurality of inner shells in a spaced arrangement relative to one another to define the plurality of channels via an exterior surface of an outer wall of the plurality of inner shells.

5. The system of claim 1, wherein the plurality of inner shells comprise a plurality of radial inner shells projecting radially outward relative to a central axis.

6. The system of claim 5, wherein the plurality of radial inner shells extend radially between an inner conduit and the outer shell, the plurality of channels comprises a plurality of radial channels between adjacent walls of the plurality of radial inner shells, and the plurality of radial channels are fluidly coupled to the inner conduit.

7. The system of claim 6, wherein the outer shell comprises a rectangular outer shell, the inner conduit comprises an annular inner conduit, and the plurality of radial inner shells comprises a plurality of wedge-shaped inner shells.

8. The system of claim 1, wherein the plurality of inner shells comprises a plurality of rectangular inner shells, the outer shell comprises a rectangular outer shell, and the plurality of rectangular inner shells are disposed in a staggered arrangement within the rectangular outer shell.

9. The system of claim 1, comprising first and second end plates disposed over opposite first and second axial ends of the heat exchanger relative to a central axis, wherein each of the first and second end plates covers and seals the plurality of channels, the first end plate includes inlet openings fluidly coupled with one or more gas inlets into the plurality of inner shells, and the second end plate includes outlet openings fluidly coupled with one more gas outlets out of the plurality of inner shells.

10. The system of claim 1, comprising a one-piece extruded body forming the outer shell, one or more inner shells of the plurality of inner shells, or a combination thereof.

11. The system of claim 10, wherein the outer shell, the plurality of inner shells, or a combination thereof, are prismatic in shape.

12. The system of claim 1, wherein the plurality of channels comprise a uniform width based on:
a shape of one or more inner shells of the plurality of inner shells;
an arrangement of the plurality of inner shells; or
a combination thereof.

13. The system of claim 1, wherein the sorbent-based gas capture system comprises a vacuum coupled to the plurality of inner shells, wherein the vacuum is configured to create a vacuum pressure within the plurality of inner shells during a desorption stage.

14. A method, comprising:
extruding an outer shell of a heat exchanger for a sorbent-based gas capture system, a plurality of inner shells of the heat exchanger, or a combination thereof;
applying a sorbent material to one or more surfaces of the plurality of inner shells; and
arranging the plurality of inner shells in an interior of the outer shell, wherein one or more fluid channels are defined by a separation between the plurality of inner shells, the outer shell, or a combination thereof.

15. The method of claim 14, comprising coupling the plurality of inner shells to a vacuum configured to create a vacuum pressure within the plurality of inner shells during a desorption stage.
